# EUROPEAN PATENT APPLICATION

(11) **EP 2 322 793 A1**
(43) Date of publication of application: **18.05.2011**
(21) Application number: 09175849.0
(22) Date of filing: 12.11.2009
(51) Int. Cl.: F03D 1/06, F03D 7/02

(54) **A trailing edge section for a turbine blade**

(71) Applicant: Dundalk Institute of Technology, Co. Louth (IE)
(72) Inventor: Staudt, Lawrence D., Co. Louth (IE)
(74) Representative: O'Neill, Aoife

(57) **Abstract**

The present invention relates to a trailing edge section (2) for a turbine blade (1). The trailing edge section comprises a first chamber (3,23) having at least one deformable wall (4); wherein the first chamber is adapted to collapse when a predetermined rotor speed is reached. In an embodiment, the trailing edge section further comprises a second chamber (26) arranged adjacent the first chamber (23), such that when the first chamber collapses, the second chamber is adapted to undergo a corresponding change in shape from an aerodynamic shape to a less aerodynamic shape.

## Description

### Field of the Invention

The present invention relates to wind turbine blades, and in particular to trailing edges of wind turbine blades.

### Background to the Invention

A wind turbine is a machine used to convert the kinetic energy in wind into mechanical energy. The mechanical energy may then be converted to electrical energy. Typically, a wind turbine comprises a rotor having a plurality of blades mounted on a tower, and an electrical generator for converting the mechanical energy to electricity.

Wind turbines require a system to prevent destructive overspeeding of the turbine. Overspeeding can occur due to extreme wind conditions, or when the turbine becomes unloaded due to generator failure. If the generator fails, it no longer limits rotation of the rotor, resulting in a "runaway" condition wherein the rotor reaches a very high rotational speed. Overspeeding, however occurring, can result in damage to the turbine.

In large wind turbines, overspeed protection is typically accomplished by a blade pitch control system. When an overspeed condition occurs, the blades are pitched at up to 90° to the wind, slowing the rotor or bringing the rotor to a stop. This system requires a blade pitching mechanism, adding cost and complexity to the turbine. Generally, this additional cost can be justified in a large wind turbine. However, small and medium-sized wind turbines are usually fixed pitch, that is, the blades are fixedly attached to the rotor hub. Thus, in smaller turbines overspeed protection is often achieved by turning the entire rotor out of the wind, or by using the generator as a brake. Turning the entire rotor out of the wind requires a tail hinge mechanism and also reduces the power output of the wind turbine in gusty conditions by unnecessarily operating the rotor at an angle to the wind. This system is mechanically difficult to implement on wind turbines above about 5kW rated power. Generator braking does not provide overspeed protection if generator windings fail.

Another approach is a blade tip brake, which centrifugally deploys to create drag at the blade tip. A mechanical disk brake may also be use, but it must be sized to produce full torque whenever it is applied. A disadvantage of these arrangements is that they may put too much strain on the turbine drivetrain.

Yet another approach is to provide a flexible member at a leading edge of the blade. One such device is described in European Patent Application No. 08159647.0 which describes a wind turbine blade comprising a deformable member arranged to form a leading edge of the blade, wherein the deformable member is adapted to undergo a sudden deformation in response to pressure difference on the blade when a predetermined rotor speed is reached. This arrangement is effective only for relatively small blades.

International Patent Application Publication No. WO 2008/003330 discloses a deformable trailing edge section of a wind turbine blade, wherein at least part of said section is formed in a deformable material. The blade section comprises one or more cavities being in connection with or connectable to a fluid source in a way that allows fluid to stream from the fluid source to the cavity or cavities, so that the shape of the deformable trailing edge section and thereby the camber of the blade cross-section is changeable by the pressure of fluid in the cavity or cavities.

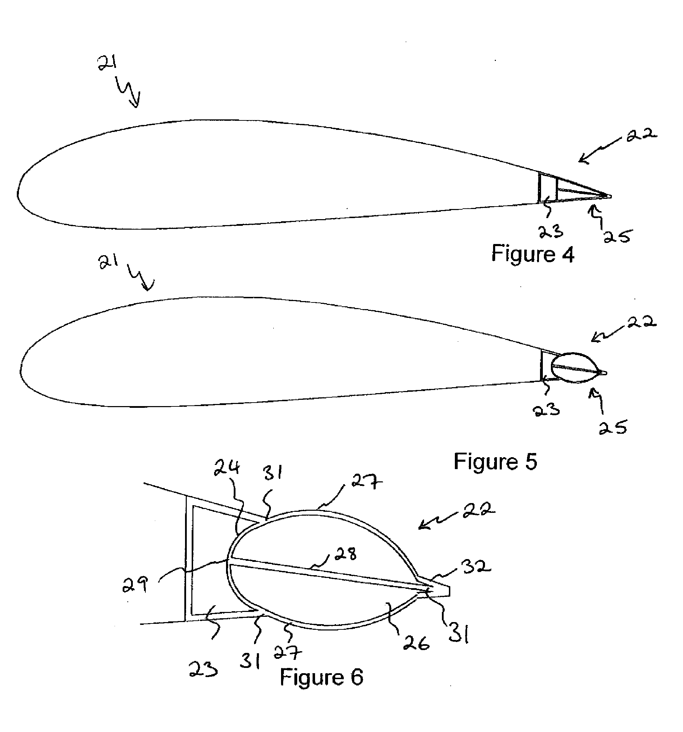

International Patent Application Publication No. W02004/088130 relates to control of power, loads and/or stability of a horizontal axis wind turbine by use of variable blade geometry control and does not seek to limit turbine rotational speed when the rotor is unloaded, such as when the generator fails. The geometry control may be achieved by active means (smart materials or embedded mechanical actuators) or passive means (changes arising from loading and/or deformation of the blade) or a combination. Figures 5, 6 and 7 of the document show possible embodiments of the deformable trailing edge region.

French Patent Application Publication No. 2 290 585 relates to a wing having a variable profile, for example for a windmill or helicopter. The profile of the wing varies as a function of the speed of rotation of the rotor, the aerodynamic pressure on the wing and/or the wind force. The leading and trailing edges of the wing are arranged to pivot about hinges in response to changes in pressure on the blade. The wing does not provide overspeed protection.

It is desirable to provide an arrangement for overspeed control in a wind turbine that can be incorporated into the blade itself, and which overcomes the disadvantages associated with current devices.

### Summary of the Invention

According to an aspect of the present invention, there is provided a trailing edge section for a turbine blade, preferably a wind turbine blade, the trailing edge section comprising:
a first chamber having at least one deformable wall;
wherein the first chamber is adapted to collapse (or deflate) when a predetermined rotor speed is reached.

Preferably, the first chamber is adapted to undergo a sudden (substantially instantaneous) deformation or deflation in response to pressure differences on the blade when a predetermined rotor speed (corresponding to an overspeed condition) is reached.

Suitably, the first chamber is hollow and flexible, and is adapted to collapse when an overspeed condition is reached. Specifically, the first chamber comprises a rubber material, and optionally, the chamber is a rubber extrusion. More specifically, the chamber may comprise EPDM rubber or silicone rubber.

In a preferred embodiment, the trailing edge section further comprises:
a deformable edge portion arranged adjacent the deformable wall of the first chamber;
wherein the first chamber is adapted to collapse (or deflate) when a predetermined rotor speed is reached, such that the deformable wall of the chamber deforms causing the edge portion to undergo a change in shape.

Preferably, the change in shape is a change from an aerodynamic shape to a less aerodynamic shape. Suitably, under normal (non-overspeed) conditions, the trailing edge section has a conventional shape, that is, when arranged on a blade, the blade has an aerofoil shape. The trailing edge section may form all or part of the trailing edge of a blade.

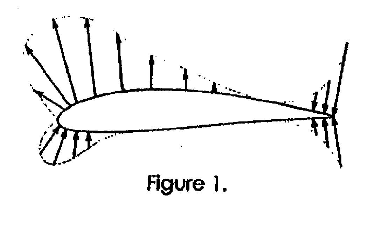

As discussed above, an overspeed condition occurs when, due to generator failure or other circumstances, a wind turbine rotor turns at a rotational speed that has the potential to damage the rotor and/or a generator which it drives, for example, due to excessive rotor thrust or centripetal force. Figure 1 shows the pressure distribution around a typical wind turbine blade, when in use. The rotation of the blade causes a vacuum (negative pressure) to be created at the upper side of the blade, and a positive pressure to be created on the underside of the blade. The forces on the trailing edge of the blade are complex, but as long as the trailing edge is relatively sharp then "circulation" is established and the aerofoil works correctly. When the trailing edge is deformed this destroys circulation and lift is lost. According to the present invention, the first chamber is adapted to collapse or deflate when the pressure differential on the blade reaches a specific threshold corresponding to an overspeed condition. Thus, the edge portion of the trailing edge section deforms so that the blade no longer has an aerofoil shape. This decreases lift and increases drag on the blade, so that the speed of the rotor is limited and damage is avoided.

One advantage of this arrangement is that it provides a simple and effective means of overspeed protection in a wind turbine. A further advantage of this arrangement is that it requires no moving parts, and is therefore robust and relatively inexpensive to produce. The present invention is thus ideally applied to small and medium sized wind turbines, which cannot justify the cost of full-span pitch control.

The trailing edge section may comprise a second chamber arranged adjacent the first chamber, such that when the first chamber collapses, the second chamber is adapted to undergo a corresponding change in shape from an aerodynamic shape to a less aerodynamic shape. Suitably, the first and second chambers may have at least one wall in common.

In one embodiment, the deformable edge portion comprises a second chamber having at least one deformable wall, wherein the deformable wall of the second chamber is arranged adjacent the deformable wall of the first chamber. Specifically, the deformable wall of the first chamber and the edge portion of the trailing edge section may comprise a rubber material, and optionally, the trailing edge section is a rubber extrusion. More specifically, the trailing edge section may comprise EPDM rubber or silicone rubber.

The deformable edge portion may comprise a substantially rigid structural member. The structural member may be formed from a rubber material. In an embodiment, the structural member has an elongate cross-section. The structural member may be connected at a first end to the deformable wall of the first chamber, such that when the first chamber collapses, the structural member is drawn towards the first chamber.

The at least one deformable wall of the edge portion may be connected to a second end of the structural member, such that when the structural member is drawn towards the first chamber, the at least one deformable wall of the edge portion undergoes a change in shape.

Preferably, the edge portion comprises two deformable walls, wherein each deformable wall is connected at a first end to the deformable wall of the first chamber and at a second end to the second end of the structural member.

Preferably, under normal conditions, the edge portion is triangular in cross-section. Preferably, in an overspeed condition, the (deformable) side walls of the edge portion are bulging or billowing in shape.

The trailing edge section may further comprise means for creating a negative pressure (vacuum) within the first chamber. The means for creating a negative pressure may comprise a fluid path between the interior of the first chamber and an area of negative pressure. For example, negative pressure generated at the upper side of the blade may be used to evacuate the first chamber As the rotor speed increases, the negative pressure on the upper side of the blade increases, thus drawing air from the interior of the first chamber and increasing the negative pressure within the first chamber. The first chamber is designed so that, when an overspeed condition is reached, the vacuum created therein is sufficient to cause the deformable wall to deform so that the first chamber goes from its normal inflated or expanded configuration to a deflated or collapsed configuration, thereby causing the deformable edge portion to undergo a change in shape. Preferably, the first chamber and the deformable edge portion should be sufficiently resilient to allow the trailing edge section to resume its normal configuration automatically, once the rotor has slowed.

As discussed above, the trailing edge section retains its normal configuration (and the blade retains its conventional aerofoil shape) until the overspeed condition is reached, at which point the trailing edge section undergoes a rapid and dramatic deformation to slow the rotor. The material, size and shape of the first chamber and deformable edge portion may be carefully selected in order to determine the speed at which the deformation occurs. The aerodynamics of the blade may also be designed to ensure that the deformation occurs at a particular rotor speed. The stronger or stiffer the material chosen, the higher the rotational speed at which the deformation will occur. Similarly, the wall thickness of the first chamber may be selected in order to determine the speed at which the deformation occurs, where the greater the wall thickness, the higher the speed at which the wall will deform. Deformation at any desired rotor speed can be achieved by selection of the material, thickness, shape or size of the walls of the first chamber.

The means for creating a vacuum may comprise at least one pressure tap point into the first chamber. The pressure tap may be provided so that the interior of the first chamber is in fluid communication with an area of negative pressure. In one embodiment, the pressure tap may be provided at an upper side of the blade to allow negative pressure created at the upper side of the blade when the blade rotates to be used to create a vacuum within the first chamber, thereby causing the chamber to deform or collapse when an overspeed condition is reached. In one embodiment, the pressure tap point comprises an aperture in the first chamber.

In another embodiment, the means for creating a vacuum comprises a centrifugally activated device.

According to a second aspect of the invention, there is provided a wind turbine blade comprising a trailing edge section as described above.

According to a third aspect of the invention, there is provided a wind turbine rotor comprising at least one, and optionally a plurality of wind turbine blades as described above.

An advantage of this arrangement is that the rotor is provided with a "failsafe" overspeed protection. If the trailing edge section of one blade fails to deform, the deformation of the other blades will still prevent an overspeed condition.

### Brief Description of the Drawings

Figure 1 is a cross-sectional view of a conventional wind turbine blade, showing the areas of positive and negative pressure;
Figure 2 is a cross-sectional view of a wind turbine blade comprising a trailing edge section according to a first embodiment of the present invention, in normal operation;
Figure 3 is a cross-sectional view of the wind turbine blade of Figure 2, wherein the trailing edge section is deployed;
Figure 4 is a cross-sectional view of a wind turbine blade comprising a trailing edge section according to a second embodiment of the present invention, in normal operation;
Figure 5 is a cross-sectional view of the wind turbine blade of Figure 4, wherein the trailing edge section is deployed; and
Figure 6 is a detail cross-sectional view of the trailing edge section of Figure 5.

### Detailed Description of the Drawings

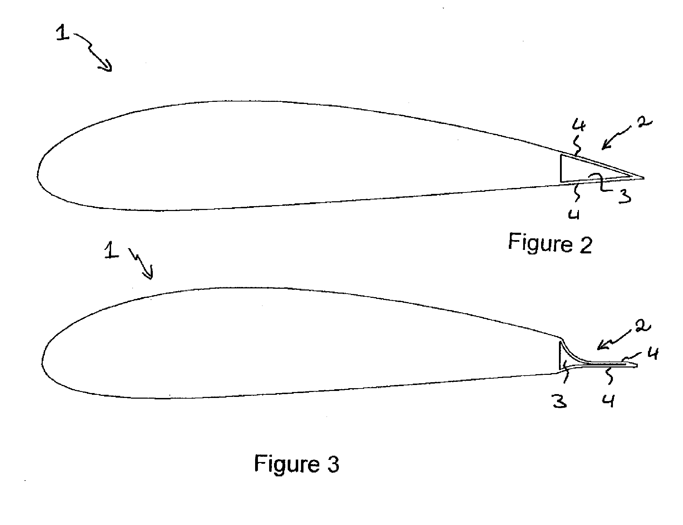

A wind turbine blade 1 comprising a trailing edge section 2 according to a first embodiment of the invention is illustrated in Figures 2 and 3 of the drawings. The trailing edge section 2 comprises a chamber 3 having deformable walls 4. The chamber 3 is adapted to collapse when a predetermined rotor speed is reached.

As shown in Figure 2, under normal (non-overspeed) conditions, the trailing edge 2 of the blade 1 has a conventional shape (i.e. the blade has an aerofoil shape). In the embodiment shown, the chamber 3 is hollow and flexible, and is adapted to collapse or deflate in response to pressure differences caused when the blade experiences an overspeed condition. The chamber 3 is adapted to undergo a sudden deformation when a predetermined rotor speed corresponding to an overspeed condition is reached. Thus, the trailing edge section 2 retains its normal configuration (and the blade 1 retains its conventional shape) until the overspeed condition is reached, at which point the trailing edge section 2 undergoes a rapid and dramatic deformation to slow the rotor, as shown in Figure 3. The change of shape (aerodynamic "damage") caused by this initial deformation is sufficient to slow the blade significantly.

A second embodiment of the present invention is shown in Figures 4, 5, and 6. As in the first embodiment, the blade 21 comprises a trailing edge section 22. In the embodiment shown, the trailing edge section 22 is a rubber extrusion. The trailing edge section 22 comprises a first chamber 23 having a deformable wall 24. The trailing edge section 22 further comprises a deformable edge portion 25 arranged adjacent the deformable wall 24 of the first chamber 23. The first chamber 23 is adapted to collapse when a predetermined rotor speed is reached, such that the deformable wall 24 of the chamber deforms causing the edge portion 25 to undergo a change in shape.

As shown in Figures 4, 5 and 6, the deformable edge portion 25 comprises a second chamber 26 having a pair of deformable walls 27. The deformable walls 27 of the second chamber 26 are arranged adjacent the deformable wall 24 of the first chamber 23. The deformable edge portion 25 further comprises a substantially rigid structural member 28, having an elongate cross-section as shown in Figures 4 to 6. As shown in Figures 4 to 6, the structural member 28 is centrally arranged in the second chamber 26. The structural member 28 is connected at a first end 29 to the deformable wall 24 of the first chamber 23, such that when the first chamber 23 collapses, the structural member is drawn towards the first chamber 23. The deformable walls 27 of the edge portion 25 are connected at a first end 31 to the deformable wall 24 of the first chamber 23 and at a second end 32 to a second end 30 of the structural member 28, such that when the structural member 28 is drawn towards the first chamber, the deformable walls 27 of the edge portion 25 undergo a change in shape as shown in Figures 5 and 6.

As shown in Figure 4, under normal (non-overspeed) conditions, the trailing edge 22 of the blade 21 has a conventional shape (i.e. the blade has an aerofoil shape). In the embodiment shown, the chamber 23 is hollow and flexible, and is adapted to collapse or deflate in response to pressure differences caused when the blade experiences an overspeed condition. The chamber 23 is adapted to undergo a sudden deformation when a predetermined rotor speed corresponding to an overspeed condition is reached. Thus, the trailing edge section 22 retains its normal configuration (and the blade 21 retains its conventional shape) until the overspeed condition is reached, at which point the first chamber 23 collapses, causing the substantially rigid structural member 28 to be drawn towards the first chamber 23. This causes the deformable walls 27 of the second chamber 26 to bulge or billow as shown in Figures 5 and 6. The change of shape (aerodynamic "damage") caused by this deformation is sufficient to slow the blade significantly.

The trailing edge section shown in Figures 4 to 6 further includes means (not shown) for creating a negative pressure within the first chamber 23. For example, the means for creating negative pressure may comprise a fluid path between the interior of the first chamber 23 and an upper side of the turbine blade. As the speed of the rotor increases, the means for creating negative pressure increases the vacuum within the first chamber 23. This ensures that the first chamber 23 collapses in a repeatable manner when the overspeed condition is reached.

The vacuum level at which the first chamber 23 collapses may be determined by careful selection of the wall thickness and materials of the chamber. The diameter of the fluid path between the chamber 23 and the upper side of the turbine blade 21 may then be selected in order to ensure that the required vacuum level is achieved at the appropriate speed, so that when the overspeed point is reached, the chamber 23 undergoes a sudden deformation.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A trailing edge section for a turbine blade, the trailing edge section comprising:
a first chamber having at least one deformable wall;
wherein the first chamber is adapted to collapse when a predetermined rotor speed is reached.

2. A trailing edge section as claimed in claim 1, further comprising:
a second chamber arranged adjacent the first chamber, such that when the first chamber collapses, the second chamber is adapted to undergo a corresponding change in shape from an aerodynamic shape to a less aerodynamic shape.

3. A trailing edge section as claimed in claim 1 further comprising:
a deformable edge portion arranged adjacent the deformable wall of the first chamber;
wherein the first chamber is adapted to collapse when a predetermined rotor speed is reached, such that the deformable wall of the chamber deforms causing the edge portion to undergo a change in shape.

4. A trailing edge section as claimed in claim 3, wherein the deformable edge portion comprises a second chamber having at least one deformable wall, wherein the deformable wall of the second chamber is arranged adjacent the deformable wall of the first chamber.

5. A trailing edge section as claimed in claim 3 or claim 4, wherein the deformable wall of the first chamber and the edge portion of the trailing edge section comprise a rubber material, and optionally, the trailing edge section is a rubber extrusion.

6. A trailing edge section as claimed in any of claims 3 to 5, wherein the deformable edge portion comprises a substantially rigid structural member.

7. A trailing edge section as claimed in claim 6, wherein the structural member has an elongate cross-section.

8. A trailing edge section as claimed in claim 6 or claim 7, wherein the structural member is connected at a first end to the deformable wall of the first chamber, such that when the first chamber collapses, the structural member is drawn towards the first chamber.

9. A trailing edge section as claimed in any of claims 6 to 8, wherein the at least one deformable wall of the edge portion may be connected to a second end of the structural member, such that when the structural member is drawn towards the first chamber, the at least one deformable wall of the edge portion undergoes a change in shape.

10. A trailing edge section as claimed in any of claims 6 to 9, wherein the edge portion comprises two deformable walls and each deformable wall is connected at a first end to the deformable wall of the first chamber and at a second end to the second end of the structural member.

11. A trailing edge section as claimed in any preceding claim, further comprising means for creating a negative pressure within the first chamber.

12. A trailing edge section as claimed in claim 11, wherein the means for creating a negative pressure comprises a fluid path between the interior of the first chamber and an upper side of the turbine blade.

13. A trailing edge section as claimed in claim 11 or 12, wherein the means for creating a negative pressure comprises at least one pressure tap point into the first chamber, and optionally the pressure tap is provided at an upper side of the first chamber.

14. A wind turbine blade comprising a trailing edge section according to any of claims 1 to 13.

15. A wind turbine rotor comprising at least one, and optionally a plurality of wind turbine blades according to claim 14.
